# EUROPEAN PATENT SPECIFICATION

(11) **EP 3 272 461 B1**
(45) Date of publication and mention of the grant of the patent: **22.12.2021**
(21) Application number: 17182612.6
(22) Date of filing: 21.07.2017
(51) Int. Cl.: B25B 7/08, B26B 17/02, B25B 7/12

(54) **A HAND TOOL**
HANDWERKZEUG
OUTIL MANUEL

(30) Priority: 22.07.2016 GB 201612739
(43) Date of publication of application: 24.01.2018
(73) Proprietor: Stanley Black & Decker MEA FZE, Dubai (AE)
(72) Inventor: Lefèvre, Jérémy, 51170 Fismes (FR); Morel, Yann, 90 000 Belford (FR); Ben Rabah, Mohamed-Ali, 75011 Paris (FR); Bayle, Julien, 25000 Besançon (FR)
(74) Representative: SBD IPAdmin

(56) References cited:
- WO-A1-90/00464
- US-A- 993 646
- US-A- 1 772 224
- US-A- 3 572 192

## Description

The present invention relates to a hand tool according to the preamble of claim 1. Such tool is known from WO90/00464A1.

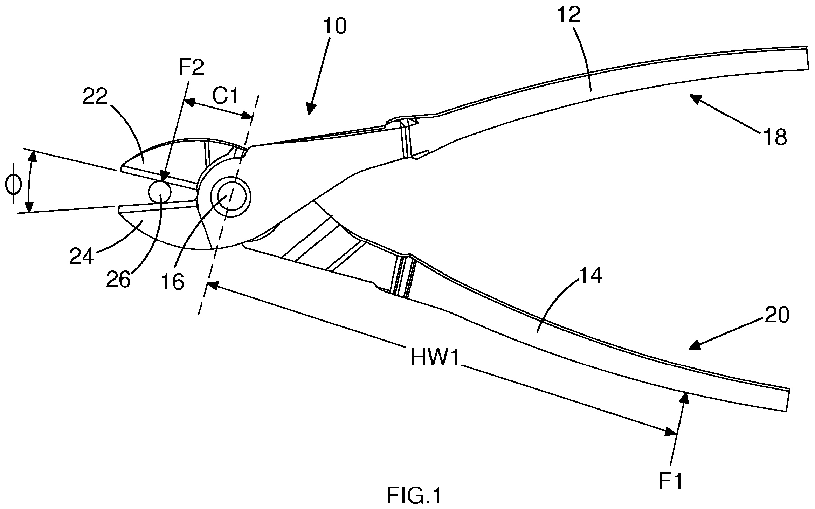

Referring to Figure 1, there is shown a standard design of a pair of pliers 10 comprising a first arm 12 and a second arm 14 pivotally connected to the first arm 12 at a cross-over point provided by an intermediate pivot pin 16. As is well known, the major length of the first and second arms 12, 14 comprises respective first 18 and second 20 gripping portions to be held by a user of the standard pliers 10. The minor limb of the first and second arms 12, 14 each comprises respective first 22 and second 24 jaws used for cutting or gripping objects when the first 18 and second 20 gripping portions are squeezed together with a closing force F1 equivalent to that applied over of a hand's width HW1 (i.e. approximately 112mm) from the pivot pin 16. A closing force F2 at the jaws 22, 24 may be located about eight-times closer (distance C1 is approximately 14mm) to the pivot pin 16 than closing force F1. A feature of the standard pliers 10 is that a torque generated by closing force F1 multiplied by distance HW1 will be equal a torque generated by closing force F2 multiplied by distance C1 and that, accordingly, the force F2 will be eight-times greater than the force F1 because the distance HW1 is eight-times greater than distance C1. In this example, the leverage effect of the standard pliers 10 produces a mechanical advantage of 8-to-1 whereby the closing force F2 is eight-times greater than the closing force F1. In the present non-limiting example, the first 22 and second 24 jaws are cutting jaws and the closing force F2 is used to cut an object 26.

The standard pliers 10 has existed for a long time and attempts have been made to develop its operation and ergonomics. For example, US patent publication No. 3,572,192 discloses a hand tool that it describes as a lever-action squeeze type, operated by one hand, by which it collectively means pruning shears for gardening, snip shears for sheet metal, gripping pliers, bolt croppers, punches, rivet setters, wire cutters or pullers, etc.

WO 90/00464 A1 discloses a hand tool that seeks to allow the strongest fingers of an operator's hand to engage the hand grip portions at the positions of maximum leverage. The described hand tool includes a first and second cutter operable by first and second pivotally connected operating members respectively, the first operating member having a portion to be gripped by a user's hand and the second operating member being coupled to a force amplifying lever pivotally connected to the first operating member at a position remote from the cutters.

The invention is defined in claim 1.

The hand tool comprises a pair of arms pivoted together at a point intermediate their ends, so that the gripping or cutting area lies on one side of this pivot, and the handle area on the other side, as with a standard pair of pliers. One arm of the hand tool is relatively long, and when the tool is grasped in a natural manner, the handle portion of this long arm may fit under a user's thumb adjacent the palm of the hand. The hand tool comprises a third arm, one end of which is pivoted at to the end of the long arm. The handle portion of this third arm may fit under a user's fingers. The other side of this third arm is constructed to have a groove or channel in sliding connection with the extreme end of the short arm of the hand tool. The hand tool further comprises a spring for urging the arms apart from each other to an open position.

The hand tool provides efficient and comfortable transfer of energy from the human hand to the hand tool. This is achieved by utilizing the additional third arm which allows a maximum amount of power to be derived from a hand squeezing action, and to do so with a minimum discomfort and strain to the hand because the strongest part of the hand squeezes the handles portions with the greatest travel. This is the reverse of a standard pair of pliers. The hand tool of the present invention provides efficient and comfortable transfer of energy from the human hand to the jaws like the three-armed hand tool disclosed by US3,572,192. Advantageously, the cam arrangement causes, by virtue of the angular reduction ratio generated by the shape of the cam, a transformational, or step change, increase in mechanical advantage of the force closing the first and third lever arms over the force closing the first and second jaws. This improves the ergonomics, performance and utility of the hand tool.

Preferably, at least a part of the cam is shaped to generate a progressive change in said mechanical advantage as the first and second jaws close. This may provide a change in mechanical advantage of the force closing the first and third lever arms over the force closing the first and second jaws to suit a particular application of the hand tool like, for example, objects of differing thickness, hardness and/or materials. The progressive change may be gradual increase or decrease of the mechanical advantage

Preferably, the at least part of the cam shaped to generate a transformational increase in said mechanical advantage is inclined in respect of a component of travel of the cam follower directed towards the rear pivot assembly. The inclination, or gradient, of the cam may modify the speed and/or direction of the cam follower as it moves along the cam. Thus, the cam may generate the transformational increase in the mechanical advantage by superimposing an angular reduction ratio on movement of the third lever arm in respect of movement of the first lever arm.

The at least part of the cam shaped to generate a transformational increase in said mechanical advantage comprises a curve. The curve shape may contribute to variations in the mechanical advantage over the cam follower's path along the cam and/or the curve shape may compensate for any such variations caused by interactions between other features of the hand tool. Preferably, the curve comprises a concave curve bulging away from the cam follower. This may provide a simple design of cam that is relatively straight-forward to manufacture.

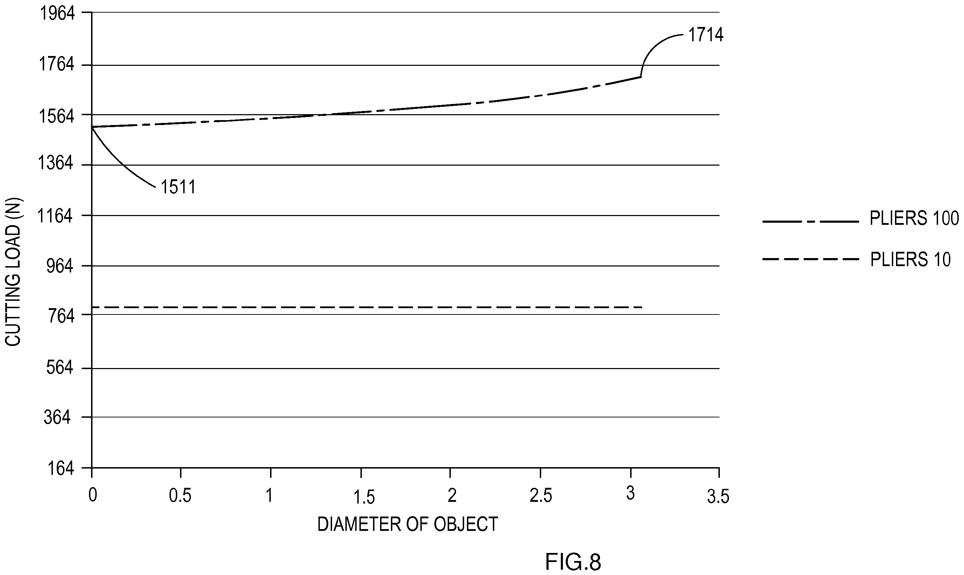

Preferably, the curve is arranged to generate a substantially constant transformational increase in said mechanical advantage. The curve may compensate for the effect of rearward movement of contact between the cam and the cam follower to largely maintain the increased force closing the first and second jaws. For example, the cam follower may approach the rear pivot assembly which may steadily increase the leverage effect of the third lever arm on the second lever arm were it not for a compensatory decrease in the gradient angle of the curve on the cam where the cam follower abuts. A substantially constant transformational increase in said mechanical advantage is one that is smooth over a range of jaw opening angles and which may, for example, vary like that shown in Figure 8 in respect of the new design of pliers.

Preferably, the transformational increase substantially doubles said mechanical advantage. This may provide a practical compromise between additional mechanical advantage and a reduced jaw closing speed. The double in mechanical advantage may be in respect of a standard design of pliers or a design of pliers with three arms like that disclosed by US3,572,192.

Preferably, the cam comprises an end stop for the cam follower. This may provide a tactile response to the user that operation of the hand tool is complete.

Preferably, the end stop comprises a concave curve tangential to the cam. This may provide a simple design of end stop that is relatively straight-forward to manufacture and that provides a progressive tactile response to the user that operation of the hand tool is complete.

Preferably, the cam comprises a substantially flat part. The flat part may be a part of the cam orientated to avoid transformational, or step change, increase in mechanical advantage and instead provide a more customary leverage effect. This may be suitable for a particular purpose like, for example, cutting or gripping a larger objects

Preferably, the hand tool comprises a spring arranged to urge the first and second jaws apart. This may enhance control of the hand tool.

Preferably, the cam follower comprises a bearing arranged to roll or slide along the cam. This may provide a simple design of cam follower that is relatively straight-forward to assemble.

Preferably, the cam is arranged on the third lever arm and the cam follower is arranged on the second lever arm. Preferably, the first lever arm is relatively longer than the second lever arm. This may generate space to accommodate the third arm and provide a more compact hand tool.

Embodiments of the present invention shall now be described with reference to the accompanying drawings of which:
Figure 2 is a side elevation view of a pair of pliers with three arms according to the present invention at the start of a cutting operation;
Figure 3 is a detailed side elevation view of a third lever arm of the pliers of Figure 2;
Figure 4A is a side elevation view of the pliers of Figure 2 soon after the start of a cutting operation;
Figure 4B is a detailed side elevation view of the third lever arm of the pliers of Figure 4A;
Figure 5A is a side elevation view of the pliers of Figure 2 around the middle of a cutting operation;
Figure 5B is a detailed side elevation view of the third lever arm of the pliers of Figure 5A;
Figure 6A is a side elevation view of the pliers of Figure 2 at the end of a cutting operation;
Figure 6B is a detailed side elevation view of the third lever arm of the pliers of Figure 6A;
Figure 7 is a data table comparing closing forces of the two pairs of pliers of Figures 1 and 2 on objects various having a diameter of between 0mm and 3mm;
Figure 8 is a graph of the data of Figure 7; and
Figure 9 is a side elevation view of another pair of pliers not according to the invention with three arms at the start of a cutting operation; and
Figure 10 is a graph of data relating to closing forces of the pair of pliers of Figure 9.

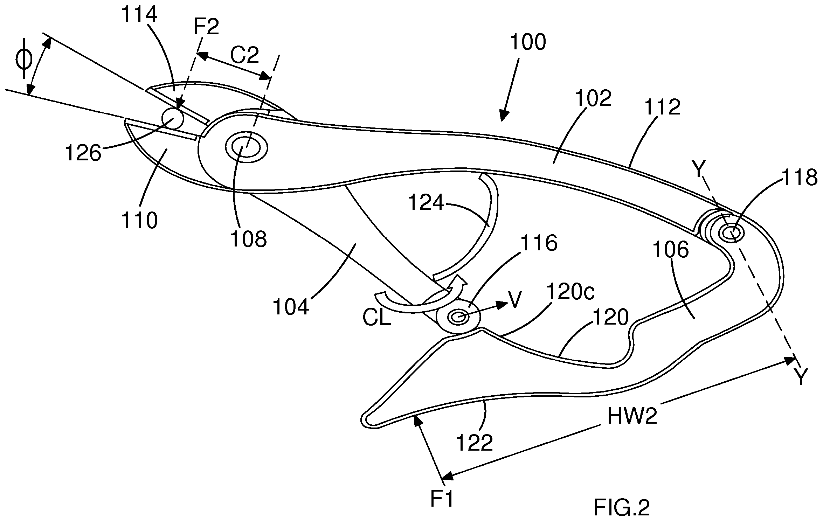

Referring to Figures 2 to 8, there is shown a new design of a pair of pliers 100 comprising a first lever arm 102, a second lever arm 104 and a third lever arm 106. The first lever arm 102 and the second lever arm 104 are pivotally coupled to each other by an intermediate pivot pin 108.

The minor limb of the first lever arm 102 comprises a first cutting jaw 110 on one side of the intermediate pivot pin 108. The major limb of the first lever arm 102 comprises a first lever arm gripping portion 112 on the other side of the intermediate pivot pin 108.

The minor limb of the second lever arm 104 comprises a second cutting jaw 114 on one side of the intermediate pivot pin 108. The major limb of the second lever arm 104 extends from the other side of the intermediate pivot pin 108 towards the third lever arm 106 where it terminates with a freely rotatable bearing wheel 116. The first lever arm 102 and the second lever arm 104 cross each at the intermediate pivot pin 108 which is intermediate their ends. The first lever arm 102 is nearly twice as long as the second lever arm 104.

The third lever arm 106 has a roughly L-shape. For simplicity, the front of the pliers 100 is where the cutting jaws 110, 114 are located and the bottom of the pliers 100 is where the third lever arm 106 is located and rear and top of the pliers 100 should be construed accordingly. The rear end of the minor limb of the third lever arm 106 is pivotally coupled to an end of the first lever arm 102 by a rear pivot pin 118. The features of the third lever arm 106 are described in relation to a horizontal axis X-X and a vertical axis Y-Y which cross in the middle of the rear pivot pion 118. The major limb of the third lever arm 106 has a cut-out in the form of a profiled cam 120 for abutment with the wheel 116 and a third lever arm gripping portion 122 on the opposite side to the profiled cam 120 of the third lever arm 106. The profiled cam 120 is located about the middle of the major limb of the third lever arm 106. The third lever arm gripping portion 122 roughly spans the middle and the front end of the third lever arm 106. The first lever arm gripping portion 112 and the third lever arm gripping portion 122 may be held and squeezed by a user's hand. The hand tool further comprises a spring 124 for urging the first lever arm 102 and the second lever arm 104, and consequently the first 110 and the second 114 cutting jaws, apart from each other to an open position.

The first 110 and second 114 cutting jaws can cut or grip objects like, for example, a wire or a plastic pipe 126. To do this, the first lever arm gripping portion 112 and the third lever arm gripping portion 122 are squeezed together with a closing force F1 shown as being effectively applied perpendicular to the axis X-X at a distance HW2 of approximately 82mm from the axis Y-Y. The bearing wheel 116 bears against the profiled cam 120 at a point T1 to move the second lever arm 104 towards the first lever arm 102 and move the point T1 in a direction generally parallel to the axis X-X towards the rear pivot pin 118 and the axis Y-Y. As a result, the cutting angle φ diminishes as the first 110 and second 114 cutting jaws move toward each other towards a closed position.

As with the standard pair of pliers 10, a closing force F2 at the first 110 and second 114 cutting jaws of the pliers 100 is influenced by the closing force F1 between the first lever arm gripping portion 112 and the third lever arm gripping portion 122. However, with the pliers 100, the rate at which point T1 moves towards the axis Y-Y additionally influences the closing force F2, as is explained in more detail below.

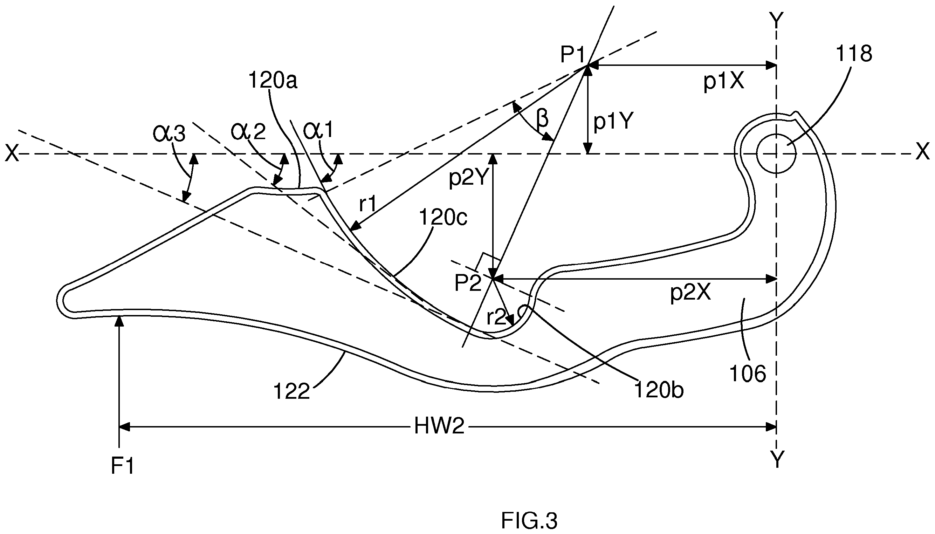

Referring in particular to Figure 3, the shape of parts of the profiled cam 120 vary along its length. The front of the profiled cam 120 starts with a substantially flat lip 120a and ends with a concave minor curve 120b. The profiled cam 120 has a concave major curve 120c between the lip 120a and the minor curve 120b.

The gradient of the profiled cam 120 at the lip 120a is about zero in relation to the axis X-X. The lip 120a is about 10mm long.

The major curve 120c of the profiled cam 120 has a radius r1 of 54mm measured from a point P1 located a distance p1Y of about 21mm above the axis X-X and a distance p1X of about 19mm in front of the axis Y-Y. The major curve 120c sweeps an arc angle β of 33.7° about the point P1 from the lip 120a to the minor curve 120b. The gradient of the major curve 120c in respect of the axis X-X decreases steadily from an angle α1 of 58° where the lip 120a joins the major curve 120c; to an angle α2 of 43° at about the middle of the major curve 120c; and an angle α3 of 25° where the major curve 120c joins the minor curve 120b.

The minor curve 120b has a radius r2 of 6mm measured from a point P2 located a distance p2Y of about 17.5mm below the axis X-X and a distance p2X of about 47mm in front of the axis Y-Y. The minor curve 120b extends tangentially from the major curve 120c where the gradient of the minor curve 120b in respect of axis X-X is the angle α3 of 25°. From there, the minor curve 120b sweeps an arc angle of 90° about the point P2 in an anti-clockwise direction as it is shown in Figure 3. In use, the minor curve 102b acts as a stop against travel of the wheel 116.

A cutting operation will now be described in more detail although it could also apply to a gripping operation. As mentioned above, the first lever arm gripping portion 112 and the third lever arm gripping portion 122 are slowly squeezed together by closing force F2 at the start of a cutting operation. Movement of the third lever arm 106 is transferred to the second lever arm 104 by abutment between the profiled cam 120 and the bearing wheel 116 as it rolls along in a direction indicated by arrow V. As a result, the second lever arm 104 closes towards the first lever arm 106 in the direction of arrow CL.

The shape, particularly the gradient, of the profiled cam 120 modifies the velocity of arrow V (i.e. speed and/or direction) as the bearing wheel 116 rolls along the profiled cam 120. In doing so, the profiled cam 120 generates a transformational increase in the mechanical advantage of the closing force F1 in relation to the closing force F2 by superimposing an angular reduction ratio on movement of the third lever arm 106 in respect of the first lever arm 102. For example, an increase in gradient angle α results in a steeper arrow V in respect of axis X-X and, consequently, greater movement of the third lever arm 106 is needed to swing the second lever arm 104 in the direction of arrow CL. This results in an increased angular reduction ratio expressed as slower closure of the first 110 and second 114 cutting jaws and a corresponding increase in the closing force F2. Conversely, a decrease in gradient angle α results in a shallower arrow V in respect of axis X-X and, consequently, less movement of the third lever arm 106 is needed to swing the second lever arm 104 in the direction of arrow CL. This results in a decreased angular reduction ratio expressed as faster closure of the first 110 and second 114 cutting jaws and a corresponding decrease in the closing force F2. However, movement of the bearing wheel 116 towards the rear pivot pin 118 increases the leverage effect of the third lever arm 106 on the second lever arm 104 and increases the mechanical advantage of the closing force F1 in relation to the closing force F2 at the first 110 and second 114 cutting jaws.

Referring in particular to Figure 2 and 3, the new design of pliers 100 is cutting a wire 126 having a diameter of between 3mm and 10mm. The bearing wheel 116 rolls along the lip 120a towards the rear pivot pin 118 with arrow V approximately parallel to the axis X-X. This steadily increases the leverage effect of movement of the first 102 and third 106 lever arms in respect of movement of the first 110 and second 114 cutting jaws which cut into the object 126 with steadily increasing closing force F2.

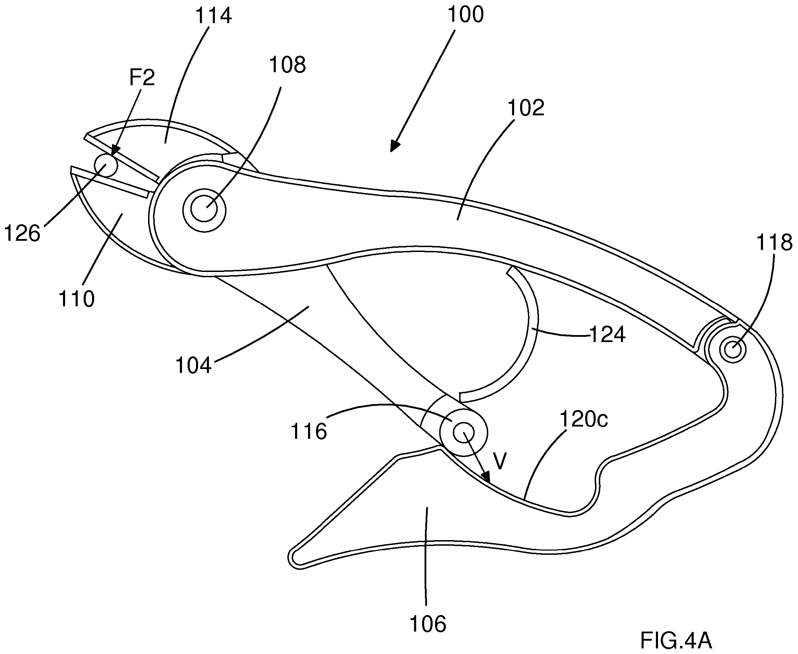

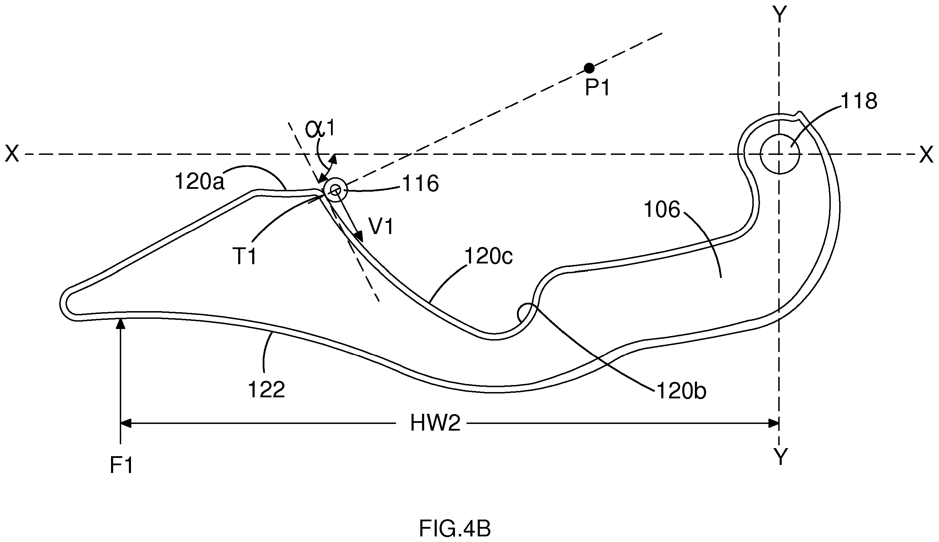

Referring in particular to Figure 4A and 4B, the pliers 100 are either continuing to cut an object 126 having a diameter of between 3mm and 10mm or cutting a new object 126 having a diameter of 3mm. The bearing wheel 116 has rolled over the lip 120a. The bearing wheel starts to roll along the major curve 120c. At the start of the major curve 120c, the gradient angle makes a sudden increase from approximately zero to a gradient angle α1 of 58° at the point T1 of contact between the bearing wheel 116 and the major curve 120c. Thus, the arrow V is inclined by gradient angle α1 of 58° in respect of the axis X-X. This superimposes a distinct decrease in closure speed of the first 110 and second 114 cutting jaws and a counterpart increase in the closing force F2.

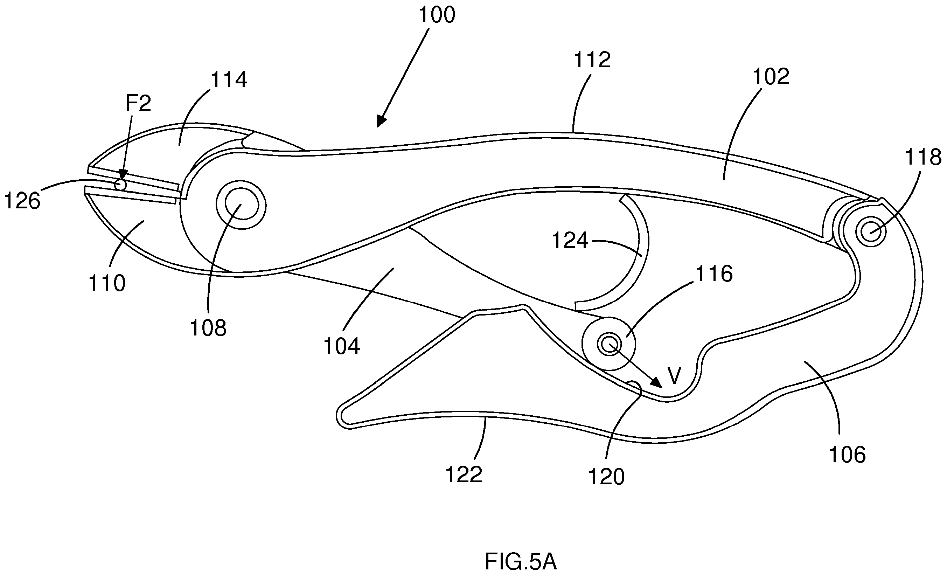

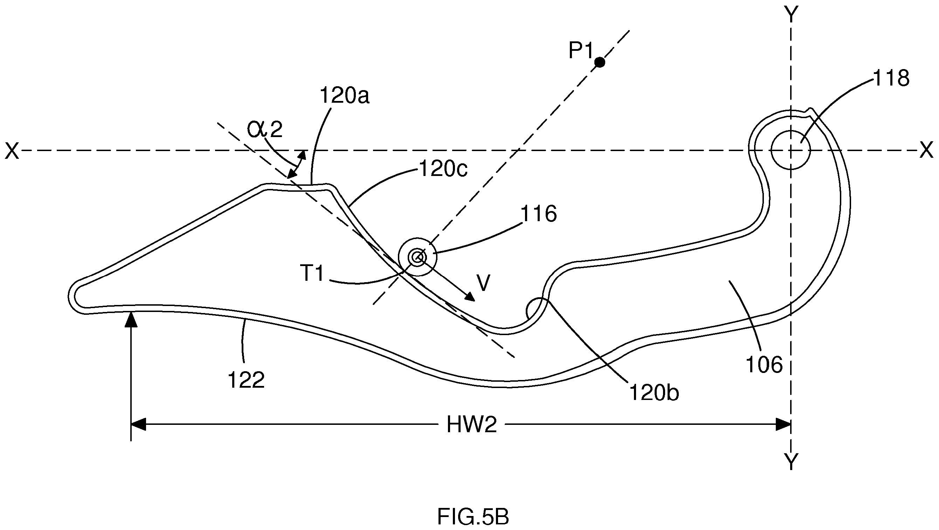

Referring in particular to Figure 5A and 5B, the pliers 100 are either continuing to cut an object 126 having a diameter of between 1.5mm and 10mm or cutting a new object 126 having a diameter of about 1.5mm. The bearing wheel 116 has rolled about halfway along the major curve 120c. At this part of the major curve 120c, the gradient angle has decreased from gradient angle α1 of 58° to a gradient angle α2 of 43° at the point T1 of contact between the bearing wheel 116 and the major curve 120c. Thus, the arrow V is inclined by gradient angle α2 of 43° in respect of the axis X-X. The decrease in closure speed of the first 110 and second 114 cutting jaws and a corresponding increase in the closing force F1 is still largely present albeit with a decreased angular reduction ratio caused by the decrease from gradient angle α1 of 58° to gradient angle α2 of 43°. However, simultaneously movement of the bearing wheel 116 towards the rear pivot pin 118 has the effect of increasing the leverage effect of the third lever arm 106 on the second lever arm 104 in a way that largely compensates for the decreased angular reduction ratio in order to restore the mechanical advantage of the pliers 100. The distinct decrease in closure speed of the first 110 and second 114 cutting jaws and counterpart increase in the closing force F2 is largely maintained.

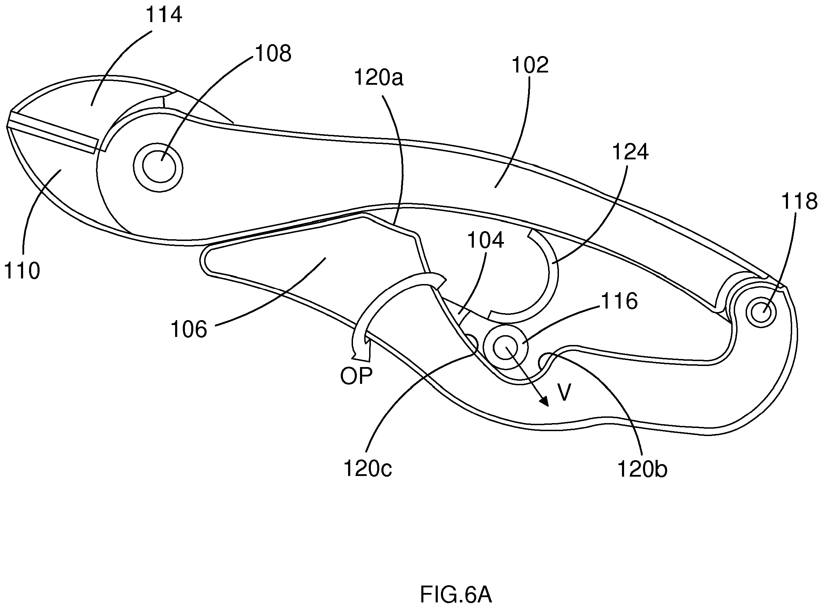

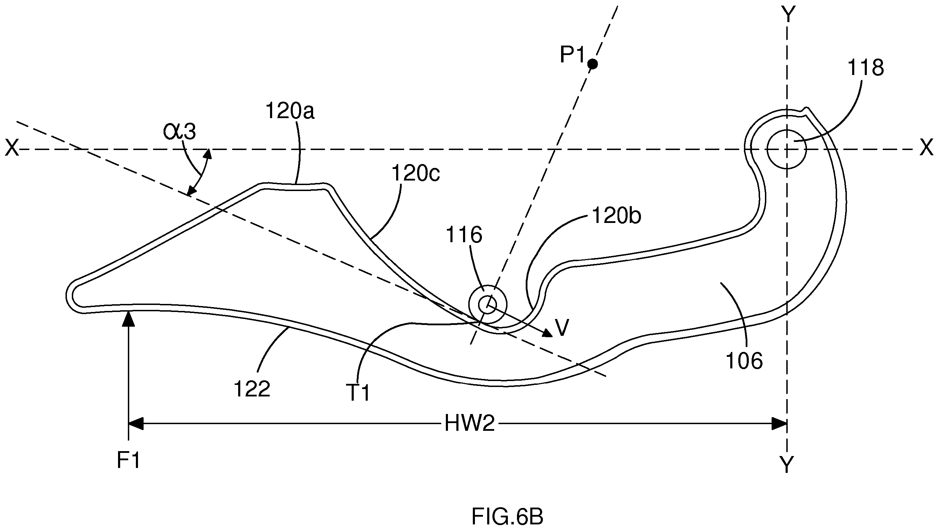

Referring in particular to Figure 6A and 6B, the pliers 100 have very nearly completed cutting an object 126. The bearing wheel 116 has rolled to the end of the major curve 120c. At this part of the major curve 120c, the gradient angle has decreased from gradient angle α1 of 58° to a gradient angle α3 of 25° at the point T1 of contact between the bearing wheel 116 and the major curve 120c. Thus, the arrow V is inclined by gradient angle α2 of 25° in respect of the axis X-X. The decrease in closure speed of the first 110 and second 114 cutting jaws and a corresponding increase in the closing force F1 is still largely present albeit with a further decreased angular reduction ratio caused by the further decrease from gradient angle α1 of 58° to gradient angle α2 of 25°. Again, simultaneous movement of the bearing wheel 116 further towards the rear pivot pin 118 has the effect of further increasing the leverage effect of the third lever arm 106 on the second lever arm 104 in a way that still largely compensates for the decreased angular reduction ratio in order to restore the multiplication factor of the pliers 100. The distinct decrease in closure speed of the first 110 and second 114 cutting jaws and counterpart increase in the closing force F2 is still largely maintained.

Eventually, the bearing wheel 116 rolls from the major curve 120c to the minor curve 120b which acts as an end stop and prevents the wheel 116 from progressing any further towards the rear pivot point 118. The first 110 and second 114 cutting jaws are closed, the object 126 is severed in two pieces and the cutting operation is complete.

Now, the first 110 and second 114 cutting jaws are ready to release the object 126. To do this, the first lever arm gripping portion 112 and the third lever arm gripping portion 122 are released and the second lever arm 104 is free to pivot away from the first lever arm 102 in the direction of arrow OP. The reverse of the cutting operation occurs and the wheel 116 rolls back towards the lip 120a of the profiled cam 120.

In use, a closing force F1 applied by a user may be relatively constant and this is assumed to be so with the following description. As with a standard pair of pliers 10, the closing force F2 of the new design of pliers 100 acting upon the object 126 is a multiple of the closing force F1. However, with the pliers 100, the closing force F2 is proportional to a combination of the magnitude of the closing force F1, the gradient of the profiled cam 120 in abutment with the bearing wheel 116 (i.e. point T1 the where closing force F1 is transferred from the third lever arm 106 to the second lever arm 104) and the proximity of point T1 to the rear pivot pin 118. The profiled cam 120 is shaped to produce a distinctly increased, steady closing force F2 at the first 110 and second 114 cutting jaws.

Returning to Figure 1, and as mentioned above, a closing force F2 at the cutting jaws 22, 24 of the standard pliers 10 may be located eight times closer to the pivot pin 16 than the closing force F1 at the gripping portions 18, 20. Thus, the force F2 acting upon the object 26 is multiple of about eight times greater than the closing force F1. The only way to alter the leverage effect of the standard pliers 10 is to either increase the distance between the intermediate pivot pin 16 and where the user's hand applies the closing force F1, which lengthens the pliers 10, or decrease the distance between the pivot pin 16 and the object 26, which decreases the cutting capacity of the pliers 10. Both options present a drawback.

Returning to Figures 2 to 8, with the new design of pliers 100, the same leverage effect parameters may be altered to vary the multiplication of the closing force F2 acting upon the object 126 as with the standard pliers 10. However, the pliers 100 have two additional means of altering the leverage effect parameters to improve the performance of the pliers 100. Firstly, and as mentioned above, the gradient of the profiled cam 120 may modify the effective rotational speed of the third lever arm 106. For example, the greater the gradient of the profiled cam 120, the greater the angular reduction ratio of movement of the first 102 and third 106 lever arms in respect of movement of the first 110 and second 114 cutting jaws and the greater the multiplication of the closing force F2 in relation to the closing force F1. Secondly, the bearing wheel 116 rolls along the profiled cam 120 and its position in respect of the rear pivot pin 118 influences the leverage effect of the third lever arm 106 on the second lever arm 104. The major curve 120c is cleverly shaped to compensate for the effect of rearward movement the bearing wheel 116 to largely maintain the increased closing force F2 of the pliers 100. For example, the bearing wheel 116 approaches the rear pivot pin 118 which would steadily increase the leverage effect of the third lever arm 106 on the second lever arm 104 were it not for the steady decrease in the gradient angle α of the point T1 at which the bearing wheel 116 abuts the major curve 102c as it approaches the minor curve 120b.

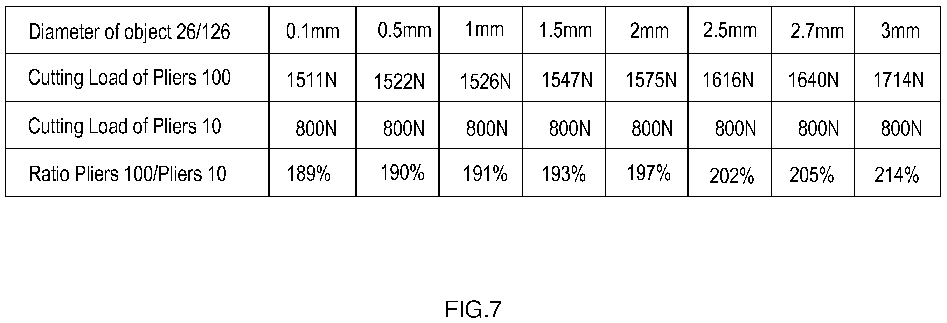

Referring in particular to Figures 7 and 8, using a typical closing force F1 from a user's hand of 100N, the closing force F2 would be a constant 800N for the standard pair of pliers 10 used to cut a wire having a diameter of anything between 0.1mm and 3mm. In the case of the new design of pliers 100, the same closing force F1 from a user's hand of 100N, results in a transformational increase in the closing force F2 which varies only a relatively small amount within range of 1511N when cutting an object 126 of 0.1mm diameter up to 1714N when cutting an object 126 with a diameter of 3mm.

The new design of pliers 100 provides efficient and comfortable transfer of energy from the human hand to the cutting jaws 110, 114. Additionally, the pliers 100 benefit from the profiled cam 120 which has been optimised to provide a distinct step change, or transformational increase, in the closing force F2 which is relatively consistent across a common range of wire diameters of up to 3mm.

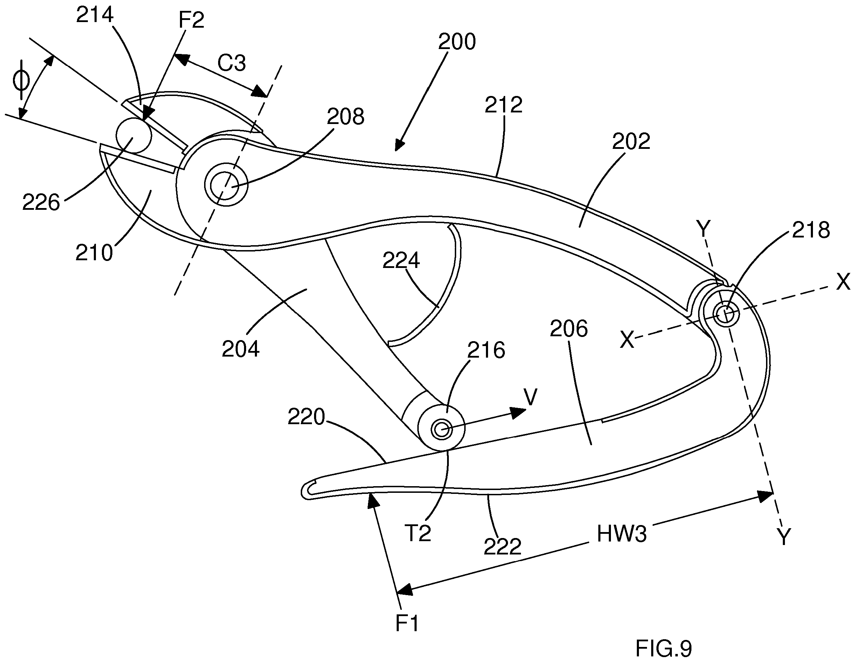

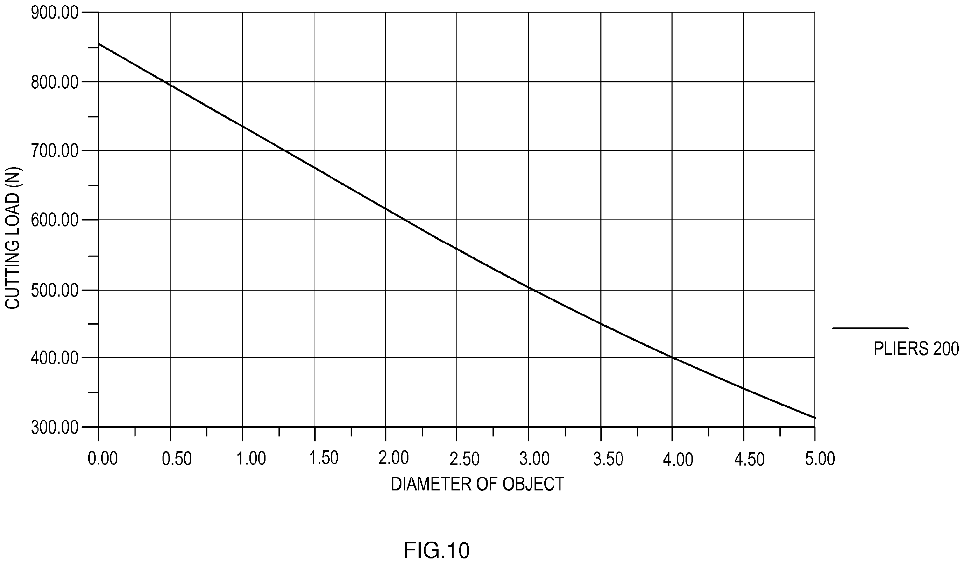

Referring to the unclaimed tool depicted and referred to in Figures 9 and 10, there is shown a pair of pliers 200 having similar characteristics to the pliers disclosed by US3,572,192 insofar as the it has three lever arms and a straight cam face.

The pliers comprises a first lever arm 202, a second lever arm 204 and a third lever arm 206. The first lever arm 202 and the second lever arm 204 are pivotally coupled to each other by an intermediate pivot pin 208. The minor limb of the first lever arm 202 comprises a first cutting jaw 210 on one side of the intermediate pivot pin 208. The major limb of the first lever arm 202 comprises a first lever arm gripping portion 212 on the other side of the intermediate pivot pin 208.

The minor limb of the second lever arm 204 comprises a second cutting jaw 214 on one side of the intermediate pivot pin 208. The major limb of the second lever arm 204 extends from the other side of the intermediate pivot pin 208 towards the third lever arm 206 where it terminates with a freely rotatable bearing wheel 216. The first lever arm 202 and the second lever arm 204 cross each at the intermediate pivot pin 208 which is intermediate their ends. The first lever arm 202 is nearly twice as long as the second lever arm 204.

The third lever arm 206 has a roughly L-shape. The rear end of the minor limb of the third lever arm 206 is pivotally coupled to an end of the first lever arm 202 by a rear pivot pin 218. The features of the third lever arm 206 are described in relation to a horizontal axis X-X and a vertical axis Y-Y which cross in the middle of the rear pivot pion 218. The major length of the third lever arm 206 has a straight cam 220 for abutment with the bearing wheel 216 and a third lever arm gripping portion 222 on the opposite side to the straight cam 220 of the third lever arm 206. The straight cam 220 is located along the major limb of the third lever arm 206. The third lever arm gripping portion 222 roughly spans the middle and the front end of the third lever arm 206. The first lever arm gripping portion 212 and the third lever arm gripping portion 222 may be held and squeezed by a user's hand. The hand tool further comprises a spring 224 for urging the first lever arm 202 and the second lever arm 204, and consequently the first 210 and the second 214 cutting jaws, apart from each other to an open position.

The first 210 and second 214 cutting jaws can cut or grip an object 226 like, for example, a wire or a plastic pipe. To do this, the first lever arm gripping portion 212 and the third lever arm gripping portion 222 are squeezed together with a closing force F1 shown as being applied at a distance HW3 of approximately 82mm from an axis Y-Y though the rear pivot pin 218. The bearing wheel 216 bears against the straight cam 220 at a point T2 to move the second lever arm 204 towards the first lever arm 202 and move point T2 in a direction V generally parallel to the axis X-X towards the rear pivot pin 218 and the axis Y-Y. As a result, the cutting angle φ diminishes as the first 210 and second 214 cutting jaws move toward each other towards a closed position.

As with the standard pair of pliers 10, a closing force F2 at distance C3 from the intermediate pivot pin 208 along the first 210 and second 214 cutting jaws is influenced by the closing force F1 between the first lever arm gripping portion 212 and the third lever arm gripping portion 222. As with the new design of pliers 100, the rate at which point T2 moves towards the axis Y-Y additionally influences the closing force F2.

The gradient of the straight cam 220 is about zero in relation to the axis X-X. The straight cam 220 extends along the major limb of the third lever arm 206 facing the bearing wheel 220. If, for example, the pliers 200 is cutting a wire 226 having a diameter of between 0.1mm and 5mm, the bearing wheel 116 rolls along the straight cam 220 towards the rear pivot pin 218 with arrow V approximately parallel to the axis X-X. This steadily increases the leverage effect of movement of the first 202 and third 206 lever arms in respect of movement of the first 210 and second 214 cutting jaws and the object 226 is cut with a steadily increasing closing force F2. In absence of any change to the gradient angle at the point T2 of contact between the bearing wheel 116 and the straight cam 220, the arrow V remains approximately parallel to the axis X-X (i.e. gradient angle of 0° in respect of the axis X-X). Thus, there is no modulation of the leverage effect of the third lever arm 106 on the second lever arm 104 to maintain a largely constant closure force F2 and closing speed at the first 110 and second 114 cutting jaws. Instead, the increase in leverage effect of the third lever arm 106 on the second lever arm 104 steadily increases the angular reduction ratio and the mechanical advantage of the pliers 200. This results in a marked increase in the closing force F2 from 300N, when cutting an object 226 with a diameter of 5mm, up to 850N, when cutting an object 226 with a diameter of 0.1mm, as is shown in Figure 10

The present invention may be applied to a bolt cropper or other lever-action squeeze type hand tool like, for example, a snip shears for sheet metal.

In the case of the bolt cropper, an intermediate jaw bracket across the first and second jaws is substituted for the sole intermediate pivot pin 108 of the new design of pliers 100. The bolt cropper's first lever arm is pivotally coupled to the jaw bracket by a first pivot pin and the second lever arm is pivotally coupled to the jaw bracket by a second pivot pin. Otherwise the bolt cropper comprising the present invention may be substantially the same as the new design of pliers and, in particular, may comprise a bearing wheel arranged at an end of the second lever arm and a profiled cam arranged upon a third lever arm. The bolt cropper may comprise a spring for urging the first lever arm and the second lever arm, and the first and the second cutting jaws, apart from each other to an open position.

As the skilled addressee will understand, the bolt cropper's jaw bracket provides a greater leverage effect needed to cut bolts instead of wires or plastic pipes. Thus, the bolt cropper's profiled cam may be curved in its own particular way to modulate the bolt cropper's already greater leverage effect in a way that produces a largely constant closure force and closing speed at the first and second cutting jaws. The same may be the case with other lever-action squeeze type hand tools where the profiled cam may be curved in another particular way to modulate the hand tool's particular leverage effect.

## Claims

1. A hand tool (100) comprising:
a first lever arm (102) with a first jaw (110);
a second lever arm (104) with a second jaw (114), wherein the first lever arm is pivotally coupled to the second lever arm by an intermediate pivot assembly (108) intermediate the ends of the first and second lever arms;
a third lever arm (106) pivotally coupled to the first lever arm by a rear pivot assembly (118) distal the first jaw, and wherein a horizontal axis X-X and a vertical axis Y-Y cross in the middle of said rear pivot assembly; and
a cam assembly (116, 120) comprising a cam (120) on the third lever arm and a cam follower (116) on the second lever arm and wherein the cam follower (116) is arranged to abut the cam (120),
wherein the cam assembly is arranged to translate a force (F1) tending to close the first and third lever arms together into a force (F2) tending to close the first and second jaws with a mechanical advantage being at least partially proportional to the distance between the cam follower and the intermediate pivot assembly,
**characterised in that** the cam (120) includes a concave major curve (120c) disposed between a lip (120a) and a concave minor curve (120b), wherein the major curve has a radius that is larger than a radius of the minor curve.

2. A hand tool (100) as claimed in claim 1, wherein the gradient of the lip (120a) is approximately zero in relation to the X-X axis.

3. A hand tool (100) as claimed in either one of claims 1 or 2, wherein the major curve (120c) is inclined in respect of a component of travel of the cam follower (116) directed towards the rear pivot assembly (118).

4. A hand tool (100) as claimed in claim 2, wherein the gradient of the major curve (120c) in relation to the X-X axis decreases steadily from an angle α1 of 58° where the lip (120a) joins the major curve (120c), to an angle α2 of 43° at about the middle of the major curve (120c), and an angle α3 of 25° where the major curve (120c) joins the minor curve (120b).

5. A hand tool (100) as claimed in claim 4, wherein the major curve (120c) bulges away from the cam follower (116).

6. A hand tool (100) as claimed in any one of the previous claims, wherein the minor curve (120b) is configured to be an end stop for the cam follower (116).

7. A hand tool (100) as claimed in claim 6, wherein the minor curve (120b) is tangential to the major curve (120c).

8. A hand tool (100) as claimed in any one of the previous claims, wherein the hand tool comprises a spring (124) arranged to urge the first (110) and second (114) jaws apart.

9. A hand tool (100) as claimed in any one of the previous claims, wherein the cam follower comprises a bearing (116) arranged to roll or slide along the cam (120).

10. A hand tool (100) as claimed in any one of the previous claims, wherein the first lever arm (102) is relatively longer than the second lever arm (104).

## Patentansprüche

1. Handwerkzeug (100), umfassend:
einen ersten Hebelarm (102) mit einer ersten Klaue (110);
einen zweiten Hebelarm (104) mit einer zweiten Klaue (114), wobei der erste Hebelarm durch eine Zwischenschwenkbaugruppe (108) zwischen den Enden des ersten und zweiten Hebelarms schwenkbar an den zweiten Hebelarm gekoppelt ist;
einen dritten Hebelarm (106), der durch eine hintere Schwenkbaugruppe (118), fern der ersten Klaue schwenkbar an den ersten Hebelarm gekoppelt ist, und wobei eine horizontale Achse X-X und eine vertikale Achse Y-Y in der Mitte der hinteren Schwenkbaugruppe schneiden; und
eine Nockenbaugruppe (116, 120), umfassend einen Nocken (120) an dem dritten Hebelarm und einen Nockenstößel (116) an dem zweiten Hebelarm, und wobei der Nockenstößel (116) angeordnet ist, an dem Nocken (120) anzuliegen,
wobei die Nockenbaugruppe angeordnet ist, eine Kraft (F1), die dazu neigt, den ersten und dritten Hebelarm zu schließen, in eine Kraft (F2) zu übertragen, die dazu neigt, die erste und zweite Klaue zu schließen, wobei ein mechanischer Vorteil zumindest teilweise zu dem Abstand zwischen dem Nockenstößel und der Zwischenschwenkbaugruppe proportional ist,
**dadurch gekennzeichnet, dass** der Nocken (120) eine konkave Hauptkrümmung (120c) beinhaltet, die zwischen einer Lippe (120a) und einer konkaven Nebenkrümmung (120b) angeordnet ist, wobei die Hauptkrümmung einen Radius aufweist, der größer als ein Radius der Nebenkrümmung ist.

2. Handwerkzeug (100) nach Anspruch 1, wobei der Gradient der Lippe (120a) annähernd null in Bezug auf die X-X Achse ist.

3. Handwerkzeug (100) nach einem der Ansprüche 1 oder 2, wobei die Hauptkrümmung (120c) in Bezug auf eine Bewegungskomponente des Nockenstößels (116) geneigt ist, die zu der hinteren Schwenkbaugruppe (118) gerichtet ist.

4. Handwerkzeug (100) nach Anspruch 2, wobei der Gradient der Hauptkrümmung (120c) in Bezug auf die X-X Achse stetig von einem Winkel a1 von 58°, wo die Lippe (120a) mit der Hauptkrümmung (120c) verbunden ist, zu einem Winkel a2 von 43° bei etwa der Mitte der Hauptkrümmung (120c) und einem Winkel a3 von 25°, wo die Hauptkrümmung (120c) mit der Nebenkrümmung (120b) verbunden ist, abnimmt.

5. Handwerkzeug (100) nach Anspruch 4, wobei die Hauptkrümmung (120c) von dem Nockenstößel (116) weg gewölbt ist.

6. Handwerkzeug (100) nach einem der vorstehenden Ansprüche, wobei die Nebenkrümmung (120b) ausgebildet ist, ein Endanschlag für den Nockenstößel (116) zu sein.

7. Handwerkzeug (100) nach Anspruch 6, wobei die Nebenkrümmung (120b) tangential zu der Hauptkrümmung (120c) ist.

8. Handwerkzeug (100) nach einem der vorstehenden Ansprüche, wobei das Handwerkzeug eine Feder (124) umfasst, die angeordnet ist, die erste (110) und zweite (114) Klaue auseinander zu drängen.

9. Handwerkzeug (100) nach einem der vorstehenden Ansprüche, wobei der Nockenstößel ein Lager (116) umfasst, das angeordnet ist, entlang des Nockens (120) zu rollen oder zu gleiten.

10. Handwerkzeug (100) nach einem der vorstehenden Ansprüche, wobei der erste Hebelarm (102) relativ länger als der zweite Hebelarm (104) ist.

## Revendications

1. Outil manuel (100) comprenant :
un premier bras de levier (102) avec un premier mors (110) ;
un deuxième bras de levier (104) avec un second mors (114), dans lequel le premier bras de levier est couplé de manière pivotante au deuxième bras de levier par un ensemble pivot intermédiaire (108) intermédiaire aux extrémités des premier et deuxième bras de levier ;
un troisième bras de levier (106) couplé de manière pivotante au premier bras de levier par un ensemble pivot arrière (118) distal du premier mors, et dans lequel un axe horizontal X-X et un axe vertical Y-Y se croisent dans le milieu dudit ensemble pivot arrière ; et
un ensemble de came (116, 120) comprenant une came (120) sur le troisième bras de levier et un poussoir de came (116) sur le deuxième bras de levier et dans lequel le poussoir de came (116) est agencé pour venir en butée contre la came (120),
dans lequel l'ensemble de came est agencé pour translater une force (F1) tendant à fermer les premier et troisième bras de levier ensemble en une force (F2) tendant à fermer les premier et second mors avec un avantage mécanique étant au moins partiellement proportionnel à la distance entre le poussoir de came et l'ensemble pivot intermédiaire,
**caractérisé en ce que** la came (120) inclut une courbe majeure concave (120c) disposée entre un rebord (120a) et une courbe mineure concave (120b), dans lequel la courbe majeure présente un rayon qui est plus large qu'un rayon de la courbe mineure.

2. Outil manuel (100) selon la revendication 1, dans lequel le gradient du rebord (120a) est approximativement zéro par rapport à l'axe X-X.

3. Outil manuel (100) selon l'une quelconque des revendications 1 ou 2, dans lequel la courbe majeure (120c) est inclinée par rapport à un composant de déplacement du poussoir de came (116) dirigé vers l'ensemble pivot arrière (118).

4. Outil manuel (100) selon la revendication 2, dans lequel le gradient de la courbe majeure (120c) par rapport à l'axe X-X diminue de façon continue d'un angle α1 de 58° où le rebord (120a) rejoint la courbe majeure (120c), à un angle α2 de 43° au niveau du milieu de la courbe majeure (120c) environ, et un angle α3 de 25° où la courbe majeure (120c) rejoint la courbe mineure (120b).

5. Outil manuel (100) selon la revendication 4, dans lequel la courbe majeure (120c) ressort loin du poussoir de came (116).

6. Outil manuel (100) selon l'une quelconque des revendications précédentes, dans lequel la courbe mineure (120b) est configurée pour être un arrêt d'extrémité pour le poussoir de came (116).

7. Outil manuel (100) selon la revendication 6, dans lequel la courbe mineure (120b) est tangentielle par rapport à la courbe majeure (120c).

8. Outil manuel (100) selon l'une quelconque des revendications précédentes, dans lequel l'outil manuel comprend un ressort (124) agencé pour séparer les premier (110) et second (114) mors.

9. Outil manuel (100) selon l'une quelconque des revendications précédentes, dans lequel le poussoir de came comprend un palier (116) agencé pour rouler ou coulisser le long de la came (120).

10. Outil manuel (100) selon l'une quelconque des revendications précédentes, dans lequel le premier bras de levier (102) est relativement plus long que le deuxième bras de levier (104).
